# EUROPEAN PATENT SPECIFICATION

(11) **EP 0 966 221 B1**
(45) Date of publication and mention of the grant of the patent: **12.06.2002**
(21) Application number: 98909868.6
(22) Date of filing: 10.03.1998
(51) Int. Cl.: A47J 31/50, A47J 31/057

(54) **APPARATUS FOR FILLING A STORAGE JUG WITH INSTANT COFFEE, AND MIXING PIPE INTENDED FOR PLACEMENT ON A STORAGE JUG FOR COFFEE**
GERÄT ZUM FÜLLEN EINER VORRATSKANNE MIT LÖSLICHEM KAFFEE UND MISCHROHR ZUM EINSETZEN IN DIE KAFFEEVORRATSKANNE
DISPOSITIF POUR REMPLIR DE CAFE INSTANTANE UN BAC DE STOCKAGE, ET TUYAU MELANGEUR CON U POUR ETRE PLACE DANS UN BAC DE STOCKAGE DE CAFE

(30) Priority: 10.03.1997 NL 1005480
(43) Date of publication of application: 29.12.1999
(73) Proprietor: Smitdesign B.V., NL-3958 BP Amerongen (NL)
(72) Inventor: SMIT, Gerard, Clement, NL-3958 BP Amerongen (NL)
(74) Representative: Ottevangers, Sietse Ulbe
(86) International application number: NL9800140
(87) International publication number: WO9839999

(56) References cited:
- NL-A- 8 602 840
- US-A- 3 606 829
- US-A- 4 300 442
- US-A- 4 833 978
- US-A- 4 875 408
- US-A- 5 028 328
- US-A- 5 038 959
- US-A- 5 503 060

## Description

The invention relates to a filling apparatus according to the preamble of claim 1.

Such an apparatus is known from US-A-4 300 442. This publication relates to an apparatus for filling a cup or mug with a relatively wide opening with instant coffee. The water reservoir of the known apparatus is a hot water reservoir in which the heating element is located. When using the apparatus, the water reservoir is therefore continuously filled with hot water which is continuously maintained by the heating element at the required temperature. The known apparatus further comprises a rather expensive device for dispensing instant coffee powder or instant coffee granules.

The known apparatus must be placed near the user thereof, since cups or mugs are directly filled therewith. In a large building with several users, it is therefore necessary to place a number of the known machines. This is relatively expensive. Moreover, it costs energy to maintain the water contained in the water reservoir at the required temperature, which energy is largely lost owing to the fact that heat leaks away from the water to the surroundings.

Because of the above drawbacks the users now prefer the use of storage jugs which are filled with instant coffee. Such storage jugs are often provided with a draw-off faucet, by means of which the contents of the storage jug can be drawn off into a cup or mug.

In general, the storage jugs are filled with instant coffee by first spooning instant coffee powder or instant coffee granules into them and then pouring hot water into the jug. To obtain a proper mixing, the storage jug must be shaken, after which instant coffee can be drawn off or poured out of the storage jug. In particular for large storage jugs of, e.g., 2.5 liters capacity, the shaking of the jug with contents is no sinecure. Moreover, the storage jugs are generally provided with a relatively small filling opening, so that the instant coffee is easily spilled when poured into the jug.

The object of the invention is to provide an apparatus for filling a storage jug provided with a filling opening with instant coffee brew, which apparatus is of such design that the above drawbacks are removed.

To this end, the apparatus is characterized by the features of claim 1. Such an apparatus can be used as a satellite machine, only one of which is placed, e.g., in the kitchen of a large building. By means of the apparatus a number of storage jugs can be filled. These storage jugs can then be distributed over the different departments of the building. The receiving holder can simply be filled by hand by placing therein a pouch filled with instant coffee or by simply filling up the receiving holder by spooning loose instant coffee powder or instant coffee granules into it. An expensive filling apparatus for dispensing an exactly measured amount of instant coffee is therefore not necessary in this apparatus. The water reservoir of the apparatus only contains cold water which is heated in the single brew cycle via the through-flow heating element and directly comes into the storage jug. In the apparatus according to the invention, there is therefore no loss of energy because of keeping hot a volume of water.

The apparatus according to the invention offers the advantage that the storage jug can simply be placed below the receiving holder for the instant coffee powder and the apparatus can then be switched on, so that water from the water reservoir is heated by means of the through-flow heating element and flows via the hot water outlet pipe and the receiving holder into the storage jug. When filling the storage jug, instant coffee brew is poured into the upper part of the mixing pipe, so that subsequently the instant coffee or the hot water flows via the pipe part into the storage jug near the bottom of the storage jug and causes a certain whirl in this storage jug. The whirl thus created effects a proper mixing between the instant coffee already present in the storage jug and the inflowing hot water or the inflowing instant coffee. After filling the storage jug, the cover can be placed on the filling opening while the mixing pipe is still in the storage jug. The receiving opening of the receiving holder is preferably relatively large, so that it is nearly impossible to spill instant coffee when filling the receiving holder. Preferably, the apparatus is directly connected via a filling line, which may or may not be provided with a stop cock, to the water supply system, so that the water reservoir can be easily filled, if required controlled by water level sensors in the reservoir and an electromagnetic stop cock in the filling line. Furthermore, according to a further elaboration of the invention the mesh size of the screen is such that substantially no undissolved instant coffee powder and/or instant coffee granules can pass therethrough.

Preferably, the apparatus comprises a guide in which the receiving holder is slidably included, so that the receiving holder when being filled can be placed on the kitchen sink and the receiving opening of the receiving holder is properly accessible.

According to a further elaboration of the invention the size of the outlet opening and the hot water throughput from the hot water outlet pipe are adjusted to each other such that, after emptying the water reservoir and, accordingly, filling the storage jug, the receiving holder is substantially rinsed out. With the apparatus according to the invention it becomes very simple to fill a large-capacity storage jug with instant coffee, and this can even be done by people of little strength.

According to a further elaboration of the invention the apparatus may comprise, for security reasons, a switch which in a first switch position interrupts an electricity supply circuit of the heating element and in a second switch position maintains the electricity circuit, which switch is provided with an operating element extending in an area in which the storage jug should be placed during use of the apparatus, which switch, in the presence of the storage jug in the area, is in the second position, and which switch, in the absence of the storage jug in the area, is in the first position. Accordingly, the apparatus is prevented from coming into action while no storage jug is present below the outlet of the hot water outlet pipe.

According to a further elaboration of the invention the upper part, in particular for a storage jug provided with a draw-off faucet, is preferably provided with at least one air discharge opening and at least one air supply channel. The air discharge opening is necessary to enable the escape of air present in the storage jug when filling the jug. The air supply channel is necessary to enable the supply of air to the interior of the storage jug when drawing off instant coffee via the draw-off faucet. In fact, without such an air supply channel a vacuum would be formed within the interior of the storage jug when instant coffee is drawn off, which would render it impossible to draw off coffee any further.

Preferably, the mixing pipe is made by an injection molding process. To obtain a withdrawable product, it is very favorable, according to a further elaboration of the invention, when the at least one air discharge opening and the at least one air supply channel are integrated into each other in the form of a slot extending from an upper edge of the upper part downward. It is then very favorable when the or each slot with a lower end is substantially located halfway up the upper part, such that coffee flowing into the upper part cannot discharge sideward and the lower end is located at least partly in the space of the storage jug to be deaerated.

The invention will be explained below in more detail by means of a number of practical examples, with reference to the accompanying drawings in which
Fig. 1 is a perspective view of the apparatus with a storage jug placed below;
Fig. 2 is a sectional view of the receiving holder;
Fig. 3 shows a part of the storage jug with a mixing pipe according to the invention partly inserted therein;
Fig. 4 shows the manner in which the cover of the storage jug connects to the upper part of the mixing pipe; and
Fig. 5 shows an alternative embodiment of a mixing pipe according to the invention.

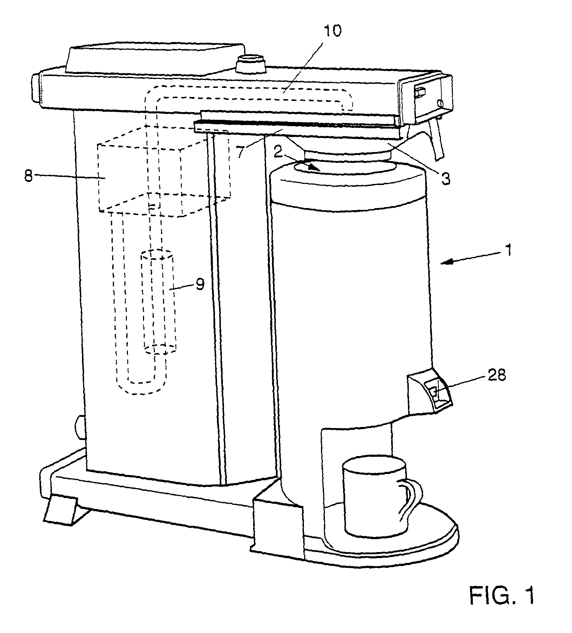

Fig. 1 shows a practical example of the apparatus according to the invention as well as a storage jug 1 provided with a filling opening 2, which storage jug 1 can be filled with instant coffee by means of the apparatus. The interior of the apparatus includes a water reservoir 8, a heating element 9 and a hot water outlet pipe 10, which are shown in dash lines. The apparatus further comprises a receiving holder 3 for instant coffee powder and/or instant coffee granules, which receiving holder 3 is slidably received in a guide 7 mounted on the apparatus.

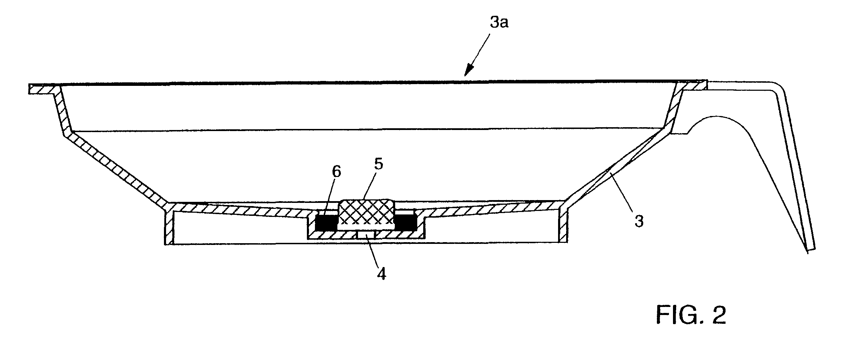

Fig. 2 is a sectional view of the receiving holder 3, from which it is apparent that the receiving holder 3 is provided near a lowest point thereof with an outlet opening 4 and a screen 5 covering the outlet opening 4. In use, the receiving holder 3 is located above the filling opening 2 of the storage jug 1 and below the free end of the hot water outlet pipe 10. The receiving holder 3 is provided with a receiving opening 3a, wide as compared with the filling opening 2, for pouring instant coffee powder and/or instant coffee granules into the receiving holder 3. The mesh size of the screen 5 is such that substantially no undissolved instant coffee powder and/or instant coffee granules can pass through. The receiving holder 3 shown is made of an injection molded part, while the screen 5 is made of, e.g., metal and is a tight fit in a receiving cavity 6 in the injection molded part. It is self-evident that the screen may also be made of other materials. Important is only that the screen has a suitable mesh size. As stated above, the outlet opening 4 and the hot water throughput of the hot water outlet pipe 10 are adjusted to each other such that, after emptying the water reservoir and, accordingly, filling the storage jug 1, the receiving holder 3 is substantially rinsed out.

Invisible in Fig. 1, but present in the practical embodiment shown, is a switch capable of interrupting the electricity supply circuit of the heating element 9 when no storage jug 1 is present in the area of placement of the storage jug. To this end, the switch is provided with an operating element which is located at the base portion of the apparatus, and against which the storage jug 1 is moved to bring the switch into a position in which the electricity supply circuit of the heating element is maintained. Thus, the apparatus is prevented from dispensing hot water while no storage jug 1 is placed below the outlet of the hot water outlet pipe 10.

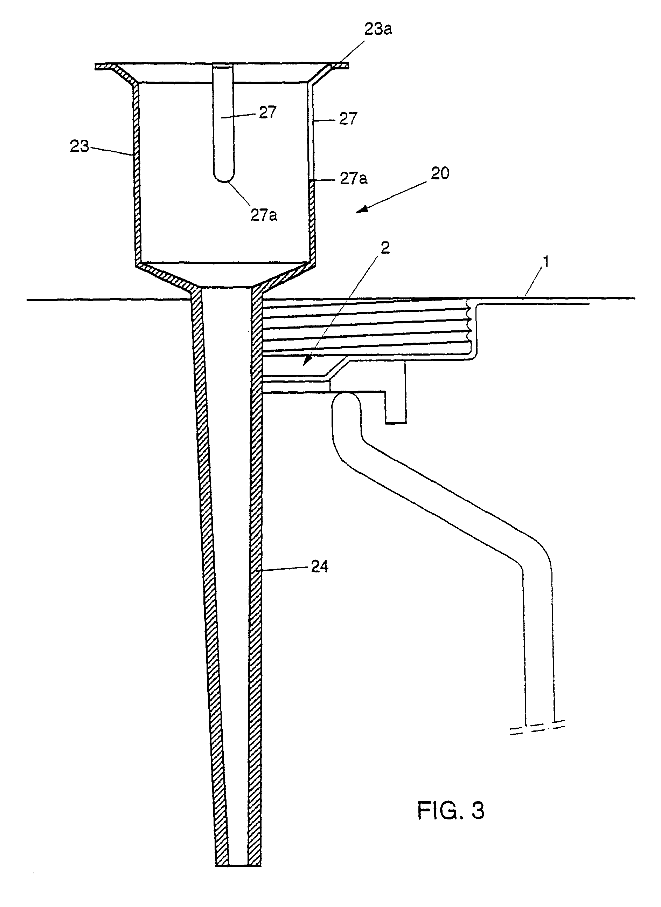

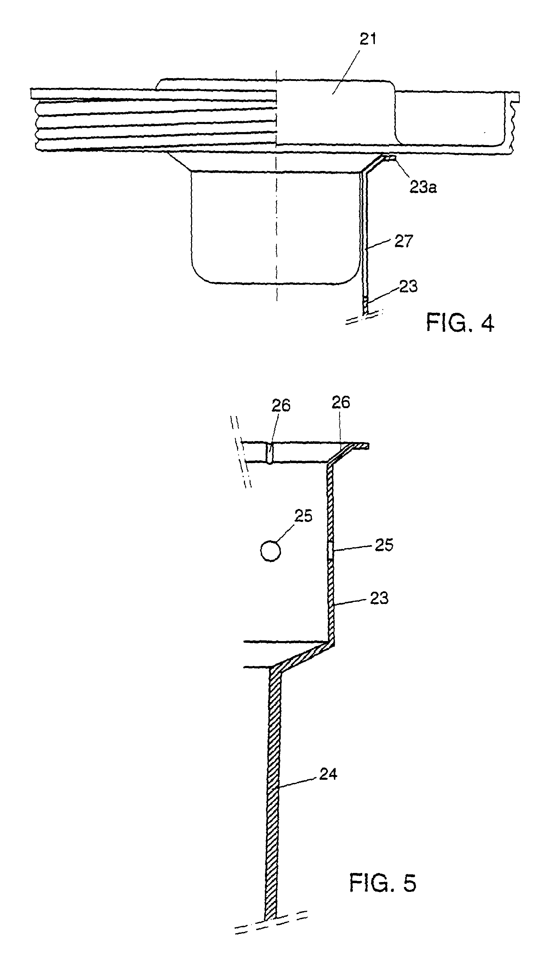

Fig. 3 shows a right part of the filling opening of the storage jug with a practical example of a mixing pipe 20 partly inserted therein. Fig. 4 shows the cover 21 by means of which the filling opening 2 of the storage jug 1 can be closed. The mixing pipe 20 is provided with an upper part 23 which can be fittingly received in the filling opening 2 of the storage jug 1, and with a pipe part 24 extending from the upper part 23 and having such a length that an outlet end thereof is located near the bottom of the storage jug 1 when the mixing pipe 20 is placed in the filling opening 2.

Fig. 5 shows a part of an alternative embodiment of the mixing pipe 20. In particular for storage jugs 1 provided with a draw-off faucet 28 it is necessary that when coffee is drawn off, air can enter the interior of the storage jug 1. To this end, at least one air supply channel 26 is provided in the upper part 23 of the mixing pipe 20. When filling the storage jug 1, it must also be possible for air to escape from the interior of the jug. To achieve this, the upper part 23 is provided with at least one air discharge opening 25. In the present practical example, the air discharge opening 25 is located approximately halfway up the vertical height of the upper part 23, so that inflowing coffee cannot discharge sideward and the air discharge opening is located at least partly in the space of the storage jug 1 to be deaerated.

In the practical example of the mixing pipe 20 shown in Figs. 3 and 4, the at least one air discharge opening and the at least one air supply channel are integrated into each other in the form of a slot 27 extending from an upper edge 23a of the upper part 23 downward. A mixing pipe 20 of such design can simply be made by an injection molding process, since the form thereof is of the withdrawable type and can be realized with a simple mold. It applies to this practical example, too, that the lower end 27a of the slot, which lower end 27a is equivalent to the air discharge opening 25, is located substantially halfway up the upper part, so that inflowing coffee cannot discharge sideward and the lower end 27a is located at least partly in the space of the storage jug 1 to be deaerated. It is further observed that Fig. 4 clearly shows how the upper part 23 of the mixing pipe 20 abuts against the cover 21 when this cover closes the filling opening 2 of the storage jug 1. It may be clear that the invention is not limited to the practical examples described, but that various modifications are possible within the scope of the invention.

## Claims

1. A filling apparatus comprising a water reservoir (8), a heating element (9), a hot water outlet pipe (10), a receiving holder (3) for instant coffee powder and/or instant coffee granules, a first end of which hot water outlet pipe (10) is in liquid communication with the water reservoir (8), and a second end of which hot water outlet pipe (10) terminates above the receiving holder (3), which receiving holder (3) is provided near a lowest point thereof with an outlet opening (4) and a screen (5) covering the outlet opening (4), **characterized in that** the heating element (9) is a through-flow heating element, which is included in the hot water outlet pipe (10) between the first and the second end thereof, which apparatus also comprises a storage jug (1) with draw-off faucet (28), which storage jug (1) has a substantial capacity, and which apparatus is arranged to completely fill the storage jug (1) in one brew cycle, the apparatus further comprising a mixing pipe (20) intended for placement in a filling opening (2) of the storage jug (1) for coffee, which opening (2) is closable with a cover (21), which mixing pipe comprises an upper part (23) which can be fittingly received in the filling opening (2) of the storage jug (1), and a pipe part (24) extending from the upper part (23) and having such a length that an outlet end thereof is located near the bottom of the storage jug (1) when the mixing pipe(20) is placed in the filling opening (2).

2. An apparatus according to claim 1, **characterized in that** the receiving holder (3) is provided with a receiving opening (3a), wide as compared with the filling opening (2), for pouring instant coffee and/or instant coffee granules into the receiving holder (3).

3. An apparatus according to any of the preceding claims, **characterized in that** the mesh size of the screen (5) is such that substantially no undissolved instant coffee powder and/or instant coffee granules can pass therethrough.

4. An apparatus according to any of the preceding claims, **characterized in that** the receiving holder (3) is made of an injection molded part, while the screen (5) is made of metal and is a tight fit in a receiving cavity (6) in the injection molded part.

5. An apparatus according to any of claims 1-4, **characterized in that** it comprises a guide (7) in which the receiving holder (3) can be slidably included.

6. An apparatus according to any of claims 1-5, **characterized in that** the size of the outlet opening (4) and the hot water throughput from the hot water outlet pipe (10) are adjusted to each other such that, after emptying the water reservoir and, accordingly, filling the storage jug (1), the receiving holder (3) is substantially rinsed out.

7. An apparatus according to any of claims 1-6, **characterized in that** it is provided with a switch which in a first switch position interrupts an electricity supply circuit of the heating element (9) and in a second switch position maintains the electricity circuit, which switch is provided with an operating element extending in an area in which the storage jug (1) should be placed during use of the apparatus, which switch, in the presence of the storage jug (1) in the area, is in the second position, and which switch, in the absence of the storage jug (1) in the area, is in the first position.

8. An apparatus according to one of the preceding claims, **characterized in that**, for the storage jug (1) provided with a draw-off faucet (28), the upper part (23) is preferably provided with at least one air discharge opening (25) and at least one air supply channel (26).

9. An apparatus according to claim 8, **characterized in that** the at least one air discharge opening and the at least one air supply channel are integrated into each other in the form of a slot (27) extending from an upper edge (23a) of the upper part (23) downward.

10. An apparatus according to claim 9, **characterized in that** the or each slot (27) with the lower end (27a) is located substantially halfway up the upper part (23), such that inflowing coffee cannot discharge sideward and the lower end (27a) is located at least partly in the space of the storage jug (1) to be deaerated.

## Patentansprüche

1. Füllvorrichtung mit einem Wasserbehälter (8), einem Heizelement (9), einem Heißwasserauslaßrohr (10), einem Aufnahmehalter (3) für Instantkaffeepulver und/oder Instantkaffeegranulat, wobei ein erstes Ende des Heißwasserauslaßrohres (10) in Flüssigkeitsverbindung mit dem Wasserbehälter (8) steht, und ein zweites Ende des Heißwasserauslaßrohres (10) über dem Aufnahmehalter (3) endet, wobei der Aufnahmehalter (3) nahe dem tiefsten Punkt desselben mit einer Auslaßöffnung (4) und einem Sieb (5) versehen ist, das die Auslaßöffnung (4) bedeckt, **dadurch gekennzeichnet, daß** das Heizelement (9) ein Durchflußheizelement ist, das in dem Heißwasserauslaßrohr (10) zwischen dem ersten und dem zweiten Ende desselben angeordnet ist, wobei die Vorrichtung ferner eine Speicherkanne (1) mit einem Ausgabehahn (28) aufweist, wobei die Speicherkanne (1) eine erhebliche Kapazität aufweist, und wobei die Vorrichtung derart ausgebildet ist, daß sie die Speicherkanne (1) in einem Brühzyklus vollständig füllt, wobei die Vorrichtung ferner ein Mischrohr (20) aufweist, das zum Anordnen in eine Füllöffnung (2) der Speicherkanne (1) für Kaffee vorgesehen ist, wobei die Öffnung (2) mit einer Abdeckung (21) verschließbar ist, wobei das Mischrohr einen oberen Teil (23), der passend in der Füllöffnung (2) der Speicherkanne (1) aufnehmbar ist, und ein Rohrteil (24) aufweist, das sich vom oberen Teil (23) aus erstreckt und eine derartige Länge aufweist, daß ein Auslaßende desselben nahe dem Boden der Speicherkanne (1) angeordnet ist, wenn das Mischrohr (20) in der Füllöffnung (2) angeordnet ist.

2. Vorrichtung nach Anspruch 1, **dadurch gekennzeichnet, daß** der Aufnahmehalter (3) mit einer Aufnahmeöffnung (3a) versehen ist, die im Vergleich mit der Füllöffnung (2) zum Einfüllen von Instantkaffee und/oder Instantkaffeegranulat in den Aufnahmehalter (3) breit ist.

3. Vorrichtung nach einem der vorhergehenden Ansprüche, **dadurch gekennzeichnet, daß** die Maschengröße des Siebs (5) derart ist, daß im wesentlichen kein ungelöstes Instantkaffeepulver und/oder Instantkaffeegranulat hindurch gelangen kann.

4. Vorrichtung nach einem der vorhergehenden Ansprüche, **dadurch gekennzeichnet, daß** der Aufnahmehalter (3) aus einem Spritzgußteil besteht, während das Sieb (5) aus Metall besteht und in einen Aufnahmehohlraum (6) im Spritzgußteil in enger Passung eingesetzt ist.

5. Vorrichtung nach einem der Ansprüche 1-4, **dadurch gekennzeichnet, daß** sie eine Führung (7) aufweist, in welcher der Aufnahmehalter (3) gleitend vorgesehen sein kann.

6. Vorrichtung nach einem der Ansprüche 1-5, **dadurch gekennzeichnet, daß** die Größe der Auslaßöffnung (4) und des Heißwasserdurchlasses aus der Heißwasserauslaßpumpe (10) derart aufeinander abgestimmt sind, daß nach dem Leeren des Wasserbehälters und dementsprechend dem Füllen der Speicherkanne (1), der Aufnahmehalter (3) im wesentlichen ausgespült wird.

7. Vorrichtung nach einem der Ansprüche 1-6, **dadurch gekennzeichnet, daß** sie mit einem Schalter versehen ist, der in einer ersten Schalterposition die Elektrizitätsversorgungsschaltung des Heizelements (9) unterbricht, und der in einer zweiten Schalterposition die Elektrizitätsschaltung aufrecht hält, wobei der Schalter mit einem Bedienungselement versehen ist, das sich in einem Bereich erstreckt, in dem die Speicherkanne (1) während des Gebrauchs der Vorrichtung angeordnet sein sollte, wobei der Schalter bei Vorhandensein der Speicherkanne (1) in dem Bereich sich in der zweiten Position befindet, und sich der Schalter in der ersten Position befindet, wenn die Speicherkanne (1) nicht vorhanden ist.

8. Vorrichtung nach einem der vorhergehenden Ansprüche, **dadurch gekennzeichnet, daß** bei einer mit einem Ausgabehahn (28) versehenen Speicherkanne (1) der obere Teil (23) vorzugsweise mit wenigstens einer Luftauslaßöffnung (25) und wenigstens einem Luftzufuhrkanal (26) versehen ist.

9. Vorrichtung nach Anspruch 8, **dadurch gekennzeichnet, daß** die wenigstens eine Luftauslaßöffnung und der wenigstens eine Luftzufuhrkanal in Form eines Schlitzes (27) integriert sind, der sich von einem oberen Rand (23a) des oberen Teils (23) nach unten erstreckt.

10. Vorrichtung nach Anspruch 9, **dadurch gekennzeichnet, daß** der oder jeder Schlitz (27) mit dem unteren Ende (27a) im wesentlichen an der Mitte des oberen Teils (23) angeordnet ist, so daß einlaufender Kaffee nicht seitlich austreten kann, und das untere Ende (27a) wenigstens teilweise im Bereich der zu entlüftenden Speicherkanne (1) angeordnet ist.

## Revendications

1. Un appareil de remplissage comprenant un réservoir d'eau (8), un élément chauffant (9), une tubulure de sortie d'eau chaude (10), un réceptacle (3) pour la poudre de café instantané et/ou pour les grains de café instantané dans lequel une première extrémité de la tubulure de sortie d'eau chaude (10) est en communication liquide avec le réservoir d'eau (8) et une seconde extrémité de la tubulure de sortie d'eau chaude (10) est orientée vers la partie supérieure du réceptacle (3), ce réceptacle (3) comportant dans la zone du point bas de celui-ci un orifice de sortie (4) et un filtre (5) recouvrant l'orifice de sortie (4), **caractérisé en ce que**, l'élément chauffant (9) est un élément chauffant à courant direct, incorporé dans la tubulure d'eau chaude (10), entre la première et la deuxième extrémité de celle-ci, ledit appareil comprenant un bol verseur (1) avec robinet d'arrêt (28), ledit bol verseur (1) ayant une capacité importante et l'appareillage étant conçu pour assurer le remplissage complet dudit bol verseur pour un cycle de mouture, l'appareillage comprenant également une tubulure de mélange (20) destinée à être placée dans l'orifice de remplissage (2), du bol verseur (1) du café, cet orifice se refermant à l'aide du couvercle (21), ladite tubulure de mélange comprenant une partie supérieure (23) pouvant être placée dans l'orifice de remplissage (2) du bol verseur (1) et une partie tubulaire (24) s'étendant à partir de la partie supérieure (23) et dont la longueur est fixée pour que l'une de ses extrémités soit située dans la zone du fond du bol verseur (1) lorsque la tubulure de mélange (20) est placée dans l'orifice de remplissage (2).

2. Appareil suivant la revendication 1, **caractérisé en ce que** le réceptacle (3) comporte un orifice de réception (3a), large par rapport à l'orifice de remplissage (2), pour verser le café instantané et/ou les grains de café instantané dans le réceptacle (3).

3. Appareil suivant l'une des revendications précédentes, **caractérisé en ce que** la largeur des mailles du filtre (5) est suffisamment réduite pour empêcher le passage à travers ce filtre, des particules de poudre de café instantané pratiquement non dissoutes ou de grains de café instantané

4. Appareil suivant l'une des revendications précédentes, **caractérisé en ce que** le réceptacle (3) est en matière plastique moulée par injection, un filtre (5) étant en métal et constituant un assemblage étanche dans une cavité réceptrice (6) de la pièce en plastique injectée.

5. Appareil suivant l'une des revendications 1 à 4, **caractérisé en ce qu'**il comprend un guide (7) dans lequel le réceptacle (3) peut être incorporé en coulissement possible.

6. Appareil suivant l'une des revendications 1 à 5, **caractérisé en ce que** la dimension de l'orifice d'entrée (4) et le débit d'eau chaude provenant de la tubulure de sortie d'eau chaude (10) sont adaptés l'un à l'autre, en sorte que, après la vidange du réservoir, et en conséquence, du remplissage du récipient (1), le réceptacle aura été rincé suffisamment.

7. Appareil suivant l'une des revendications 1 à 6, **caractérisé en ce qu'**il comporte un interrupteur coupant dans sa première position, le circuit de l'alimentation électrique de l'élément chauffant et maintenant dans sa deuxième position l'alimentation électrique, cet interrupteur comportant un organe de commande dans une zone dans laquelle est placé, en cours d'utilisation de l'appareil, le bol verseur (1), ledit interrupteur, étant, en présence du bol verseur (1) dans la zone, dans sa seconde position, et en l'absence de ce bol verseur (1) se trouvant dans sa première position.

8. Appareil suivant l'une des revendications précédentes, **caractérisé en ce que** le réceptacle (3) est équipé d'un robinet verseur (28) la partie supérieure (23) étant, de préférence, munie d'un orifice de purge d'air (25) et d'au moins un canal d'admission d'air (26).

9. Appareil suivant la revendication 8, **caractérisé en ce que** le ou les orifices de purge d'air et le ou les canaux d'admission d'air sont emmanchés l'un dans l'autre sous forme d'une fente (27) s'étendant vers le bas depuis le bord supérieur (23a) de la partie supérieure (23).

10. Appareil suivant la revendication 9, **caractérisé en ce que** l'extrémité inférieure de la ou des fentes (27) est située à mi-hauteur de la partie supérieure (23), en sorte que le café en cours de versement, ne peut pas se renverser latéralement et l'extrémité inférieure (27a) est située en partie dans la zone du bol verseur (1) devant être purgée d'air.
